# FASCICULE DE BREVET EUROPEEN

(11) **EP 2 292 035 B1**
(45) Date de publication et mention de la délivrance du brevet: **08.10.2014**
(21) Numéro de dépôt: 09738073.7
(22) Date de dépôt: 24.04.2009
(51) Int. Cl.: H04L 12/26, H04W 24/06

(54) **PROCEDE DE DIAGNOSTIC D'UN TERMINAL DE TELEPHONIE MOBILE INCLUANT DES APPLICATIONS SANS CONTACT**
VERFAHREN ZUR DIAGNOSTISCHEN PRÜFUNG EINES MOBILTELEFONENDGERÄTS, DAS KONTAKTLOSE ANWENDUNGEN UMFASST
METHOD FOR THE DIAGNOSTIC TESTING OF A MOBILE TELEPHONE TERMINAL INCLUDING CONTACTLESS APPLICATIONS

(30) Priorité: 30.04.2008 FR 0852944
(43) Date de publication de la demande: 09.03.2011
(73) Titulaire: Bouygues Telecom, 75116 Paris (FR)
(72) Inventeur: JACOB, Antoine, F-78000 Versailles (FR); GRONDIN, Charles-Emile, F-93800 Epinay Sur Seine (FR); LE PALLEC, Pierre, F-78960 Voisins Le Bretonneux (FR)
(74) Mandataire: Regimbeau
(86) Numéro de dépôt international: PCT/EP2009/054953
(87) Numéro de publication internationale: WO 2009/133029

(56) Documents cités:
- WO-A-02/51183
- WO-A-2004/012352
- WO-A-2006/137740
- WO-A-2007/132282
- GB-A- 2 421 401
- GB-A- 2 427 328
- US-A1- 2008 081 608

## Description

### DOMAINE DE L'INVENTION

L'invention concerne un procédé de diagnostic d'un terminal de téléphonie mobile incluant une ou plusieurs application(s) sans contact. L'invention concerne également une borne sans contact associée et un terminal de téléphonie mobile associé.

### ETAT DE LA TECHNIQUE

De plus en plus de services utilisent des techniques de communication sans contact. Ces techniques permettent à des appareils d'échanger des données entre eux ou avec une carte à puce sans contact, par le biais d'une liaison radiofréquence de courte portée (typiquement de l'ordre de quelques centimètres dans le cadre de la norme ISO 14443) ou de proximité (de l'ordre d'un mètre dans le cadre de la norme ISO 15693).

Par « sans contact », on qualifie un échange de données entre un lecteur sans contact (Proximity Coupling Device - PCD) et une carte sans contact (Proximity Integrated Circuit Card - PICC), dans lequel le lecteur émet un signal radioélectrique sur une fréquence porteuse prédéterminée et la carte émet un autre signal par rétromodulation de la fréquence porteuse.

La carte peut être « passive », auquel cas elle est alimentée en énergie par le champ radioélectrique émis par !e lecteur (par modulation de charge par couplage inductif), ou « active », auquel cas, elle inclut une source d'énergie spécifique.

On connaît du document US 2008/0081608 un procédé de collection de données de fonctionnement émises par un terminal mobile sans contact. On connaît également du document GB 2421401 un procédé de test d'un terminal sans fil en communication avec un instrument de test.

Par ailleurs, les documents WO 02/51183 et WO 2006/137740 décrivent des moyens de transmission sans contact associés à des cartes SIM ou ESIM.

Certains terminaux mobiles (téléphones mobiles ou PDA) incluent des applications sans contact permettant à des utilisateurs d'utiliser leur terminal mobile comme un support d'information apte à échanger des données, le terminal pouvant ainsi remplir une fonction de carte de paiement, carte de fidélité, badge, billet de spectacle, titre de transport ou clef par exemple. Ces applications peuvent être stockées dans la carte UICC (Universal Integrated Circuit Card) du terminal.

Avec la multiplication des services utilisant ce mode d'échange de données, un même terminal mobile doit pouvoir mettre en oeuvre plusieurs applications sans contact, chaque application pouvant être utilisée dans le cadre d'un service spécifique procuré par un fournisseur ou prestataire de service. Les différentes applications ne sont pas nécessairement associées au même fournisseur ou prestataire de service. En outre, le prestataire de service n'est pas nécessairement l'opérateur de téléphonie mobile. Par exemple, une application de paiement peut être utilisée par un utilisateur qui a souscrit à un service de paiement sans contact proposé par une banque.

Lorsque l'utilisateur rencontre des problèmes pour accéder à un service donné, il peut s'adresser au service après-vente de l'opérateur de téléphonie mobile.

Cependant, les problèmes rencontrés peuvent avoir différentes causes :
Dans un premier cas, l'impossibilité d'accéder au service peut résulter d'un dysfonctionnement des composants sans contact du terminal mobile ou de la carte UICC dans laquelle l'application est enregistrée.

Dans un deuxième cas, l'impossibilité d'accéder au service peut résulter d'un dysfonctionnement de l'application.

Dans le premier cas, l'opérateur de téléphonie mobile doit remédier aux problèmes rencontrés, par exemple en remplaçant le terminal mobile ou la carte UICC. Dans le deuxième cas, c'est le fournisseur de service qui doit garantir le bon fonctionnement de l'application sans contact.

Cependant, il est parfois difficile d'identifier les causes des dysfonctionnements pour orienter l'utilisateur vers l'interlocuteur approprié (l'opérateur de téléphonie mobile ou le fournisseur de service).

Pour tenter d'identifier les causes des dysfonctionnements, il est généralement nécessaire d'extraire la carte UICC du terminal mobile et de réaliser des tests de fonctionnement.

En outre, il n'est actuellement pas possible de tester les autres composants du terminal mobile.

### PRESENTATION DE L'INVENTION

Un but de l'invention est de permettre une identification rapide et simple des causes de dysfonctionnement.

Ce problème est résolu dans le cadre de la présente invention grâce à un procédé de diagnostic d'un terminal de téléphonie mobile incluant une carte UICC dans laquelle est enregistrée une application témoin et un module de communication sans contact, le module de communication sans contact étant apte à échanger des données avec une borne sans contact par rétromodulation d'un signal émis par la borne, comprenant une opération de test selon laquelle :
- la borne émet une requête de sélection de l'application témoin,
- la borne détecte une réponse de confirmation ou d'échec de sélection de l'application, émise par le terminal de téléphonie mobile,
- la borne détermine un état de fonctionnement de la carte UICC ou du terminal en fonction de la réponse détectée.

La carte UICC est programmée avec une application témoin spécifique permettant au terminal mobile de répondre à la borne lors d'une opération de test. L'opération de test permet ainsi de vérifier que la chaine des composants sans contact (module de communication et carte UICC) fonctionne correctement, sans nécessité d'extraire la carte UICC.

Le procédé peut comprendre des étapes selon lesquelles :
- si la borne ne détecte aucune réponse de la part du terminal mobile, la borne en déduit un dysfonctionnement du terminal mobile,
- si la borne détecte une réponse d'erreur de la part du terminal mobile, la borne en déduit un dysfonctionnement de la carte UICC.

Dans une mise en oeuvre de l'invention, le procédé comprend une opération de test préalable selon laquelle :
- la borne émet une requête d'initialisation présentant un format prédéterminé,
- la borne détecte ou non une réponse émise par le terminal de téléphonie mobile,
- la borne en déduit un état de fonctionnement du terminal mobile en fonction de la détection ou non de la réponse.

L'opération de test préalable permet de vérifier que le terminal mobile fonctionne avant de réaliser l'opération de test de la chaine des composants sans contact.

L'opération de test préalable peut être exécutée de la manière suivante :
- la borne émet une pluralité de requêtes d'initialisation successives, chaque requête présentant un format qui varie selon une séquence prédéterminée de format de requête,
- si la borne détecte une réponse, alors la borne exécute les étapes de l'opération de test suivante en vue de vérifier le fonctionnement de la chaine de composants sans contact,
- si la borne ne détecte aucune réponse, alors la borne en déduit un dysfonctionnement du terminal.

Dans une mise en oeuvre de l'invention, le procédé comprend également une opération de test ultérieure selon laquelle :
- la borne émet une commande d'interrogation du répertoire de la carte UICC,
- la borne détermine si une application donnée est présente dans la carte UICC en recherchant l'application parmi une liste d'applications transmise par le terminal mobile en réponse à la commande d'interrogation,
- la borne en déduit un état de fonctionnement de l'application.

L'opération de test ultérieure est réalisée dans le cas où les deux opérations de tests précédentes n'ont pas permis de conclure à un dysfonctionnement du terminal ou de la chaine de composants sans contact. L'opération de test ultérieure permet de vérifier qu'une application sans contact donnée est bien présente dans la carte UICC.

L'opération de test ultérieure peut être exécutée de la manière suivante :
- si la borne détermine que l'application donnée est présente, alors la borne en déduit un dysfonctionnement de l'application.

Dans une mise en oeuvre de l'invention, la borne interroge une base de données pour déterminer si l'utilisateur du terminal mobile a souscrit au service associé à l'application donnée.

L'invention concerne également une borne sans contact pour diagnostiquer un état de fonctionnement d'un terminal de téléphonie mobile incluant une carte UICC dans laquelle est enregistrée une application témoin et un module de communication sans contact, le module de communication sans contact étant apte à échanger des données avec la borne sans contact par rétromodulation d'un signal émis par la borne, la borne étant apte à exécuter une ou des opération(s) de test définie(s) précédemment.

L'invention concerne également un terminal de téléphonie mobile incluant une carte UICC dans laquelle est enregistrée une application témoin et un module de communication sans contact, le module de communication sans contact étant apte à échanger des données avec une borne sans contact par rétromodulation d'un signal émis par la borne, l'application témoin étant programmée pour exécuter une opération de test selon laquelle, lorsque le module de communication reçoit une requête de sélection de l'application témoin émise par la borne, le module de communication renvoie à la borne une réponse de confirmation de sélection de l'application, de sorte que la borne puisse déterminer un état de fonctionnement de la carte UICC en fonction de la réponse renvoyée.

### PRESENTATION DES DESSINS

D'autres caractéristiques et avantages ressortiront encore de la description qui suit, laquelle est purement illustrative et non limitative et doit être lue en regard des figures annexées, parmi lesquelles :
- la figure 1 représente de manière schématique un terminal de téléphonie mobile incluant un module de communication sans contact et une borne de diagnostic,
- la figure 2 représente de manière schématique des étapes d'une première opération de test conforme à un mode de mise en oeuvre du procédé de diagnostic de l'invention,
- la figure 3 représente de manière schématique des étapes d'une deuxième opération de test conforme à un mode de mise en oeuvre du procédé de l'invention,
- la figure 4 représente de manière schématique des étapes d'une troisième opération de test conforme à un mode de mise en oeuvre du procédé de l'invention.

### DESCRIPTION DETAILLEE D'UN MODE DE REALISATION

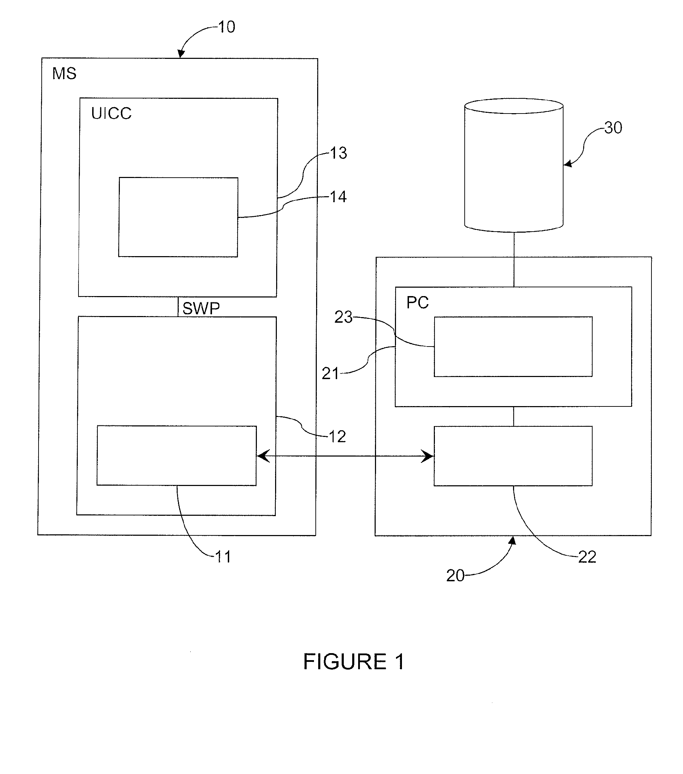

La figure 1 représente de manière schématique un terminal de téléphonie mobile 10 et une borne de diagnostic 20.

Le terminal de téléphonie mobile 10 est un terminal apte à établir des communications téléphoniques via un réseau cellulaire de téléphonie mobile.

Le terminal de téléphonie mobile 10 est par ailleurs adapté pour échanger des données avec une borne sans contact.

A cet effet, le terminal 10 comprend un module de communication sans contact 12 incluant une antenne spécifique 11, et une carte UICC 13 dans laquelle sont stockées une ou plusieurs applications sans contact. La carte UICC 13, qui est par exemple une carte SIM, contient en particulier une application témoin 14.

La carte UICC 13 est initialement programmée avec l'application témoin 14 lors de la fabrication en usine ou est configurée à distance. Dans ce dernier cas, l'application 14 est transmise au terminal mobile via le réseau de téléphonie cellulaire (transmission OTA - Over the Air) et enregistrée dans la carte UICC.

De manière conventionnelle, le module de communication 12 est connecté à la carte UICC 13 au moyen d'un contact unique. Le module de communication 12 et la carte UICC 13 sont aptes à échanger des données selon un protocole SWP (Single Wire Protocol) via le contact unique.

La borne de diagnostic 20 comprend un ordinateur 21 et une antenne 22 apte à émettre des signaux radiofréquence à destination du terminal mobile 10. L'ordinateur 21 inclut un lecteur 23 apte à décoder les signaux reçus par l'antenne 22. L'ordinateur 21 contient un programme de diagnostic permettant de tester le fonctionnement du terminal mobile 10.

Enfin, la borne de diagnostic 20 est reliée à une base de données 30 de l'opérateur de téléphonie mobile. La base de données 30 contient des données concernant les abonnés du réseau de téléphonie mobile.

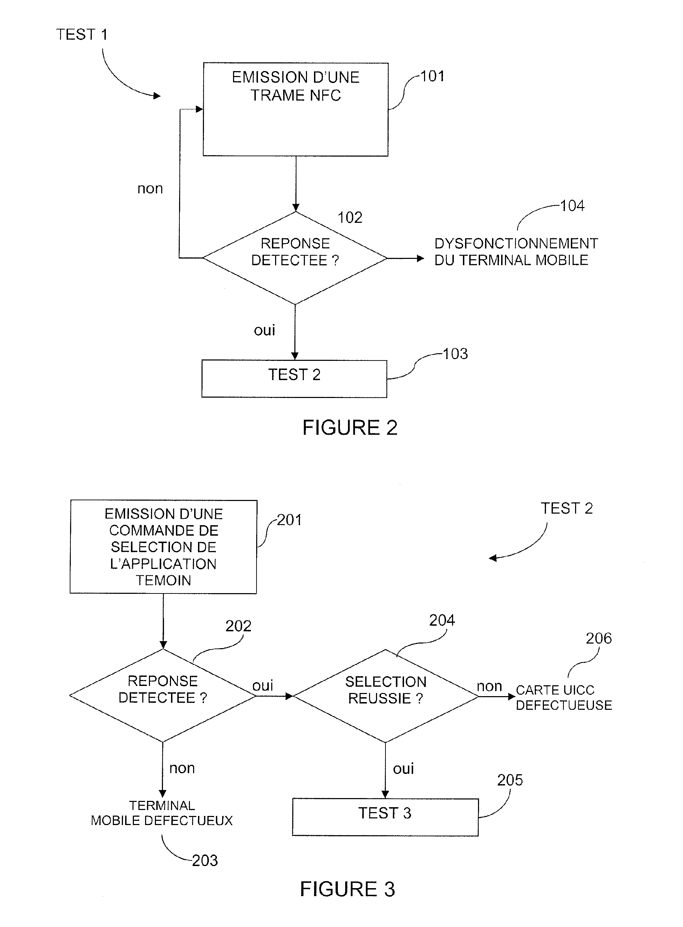

Les figures 2 à 4 représentent des étapes d'un procédé de diagnostic d'un terminal de téléphonie mobile conforme à un mode de mise en oeuvre de l'invention.

On suppose que l'utilisateur du terminal de téléphonie mobile s'adresse à un centre de service après-vente pour signaler qu'il ne parvient pas à accéder à un service donné avec son terminal mobile.

Le programme de diagnostic est apte à exécuter automatiquement les différentes étapes du procédé. Le procédé de diagnostic se déroule en trois opérations de test successives.

Une première opération de test (TEST 1) est représentée sur la figure 2.

Selon une première étape 101, le programme de diagnostic commande une émission par l'antenne d'un signal radiofréquence sous la forme d'une commande d'initialisation (REQUEST - REQ) conforme à un premier protocole de communication prédéterminée. Le signal reçu par l'antenne est transmis au module de communication sans contact. Le module de communication traite le signal et renvoie une réponse (ANSWER TO REQUEST ou ATQ).

Selon une deuxième étape 102, le programme de diagnostic détermine si une réponse est émise par le terminal. La réponse attendue consiste en un signal de réponse incluant un identifiant (ID) du module de communication sans contact. Le signal de réponse est généré par modulation de la trame NFC émise par la borne de diagnostic.

Si une réponse est détectée par le lecteur, alors selon une troisième étape 103, le programme de diagnostic déclenche une deuxième opération de test (TEST 2).

Si aucune réponse n'est détectée par le lecteur, le programme de diagnostic exécute à nouveau la première étape 101. Cette fois, le terminal émet un signal radiofréquence sous la forme d'une trame NFC conforme à un deuxième protocole de communication prédéterminé, différent du premier protocole.

Tant qu'aucune réponse n'est reçue du terminal mobile, le programme de diagnostic renouvelle l'étape 101 en balayant une séquence prédéterminée de protocoles. Un exemple de séquence est représenté dans le tableau 1.

**Tableau 1**

| Protocole | Norme | Fréquence | Interface (modulation et codage) |
|---|---|---|---|
| 1 | ISO 14443 | 13,56 MHz | Type A |
| 2 | ISO 14443 | 13,56 MHz | Type B |
| 3 | ISO 14443 | 13,56 MHz | Type B' Innovatron' |
| 4 | ISO 15693 | 13,56 MHz | |

Selon une quatrième étape 104, lorsque la séquence entière a été balayée par la borne de diagnostic et qu'aucune réponse n'a été reçue du terminal mobile, la borne de diagnostic conclut à un dysfonctionnement du terminal mobile. Dans ce cas, le terminal mobile de l'utilisateur doit être remplacé.

La deuxième opération de test (TEST 2) est représentée sur la figure 3.

Selon une première étape 201, le programme de diagnostic commande une émission par l'antenne d'un signal radiofréquence sous la forme d'une commande de sélection (SELECT) de l'application témoin.

Selon une deuxième étape 202, le programme de diagnostic détermine si une réponse est émise par le terminal. La réponse attendue consiste en un signal de réponse incluant une information de confirmation de sélection (SELECT ACKNOWLEDGE ou SAK).

Si aucune réponse n'est détectée par le lecteur, alors selon une troisième étape 203, la borne de diagnostic conclut à un dysfonctionnement du terminal mobile.

Si une réponse est détectée, alors selon une quatrième étape 204, la borne de diagnostic détermine si la sélection a réussi. Autrement dit, le programme de diagnostic détermine si le lecteur détecte une réponse de confirmation de la sélection ou une réponse d'erreur.

Si une réponse de confirmation de la sélection est détectée par le lecteur, alors selon une cinquième étape 205, le programme de diagnostic déclenche une troisième opération de test (TEST 3).

Si une réponse d'erreur est détectée, alors selon une sixième étape 206, la borne de diagnostic conclut à un dysfonctionnement de la carte UICC. Dans ce cas, la carte UICC doit être remplacée.

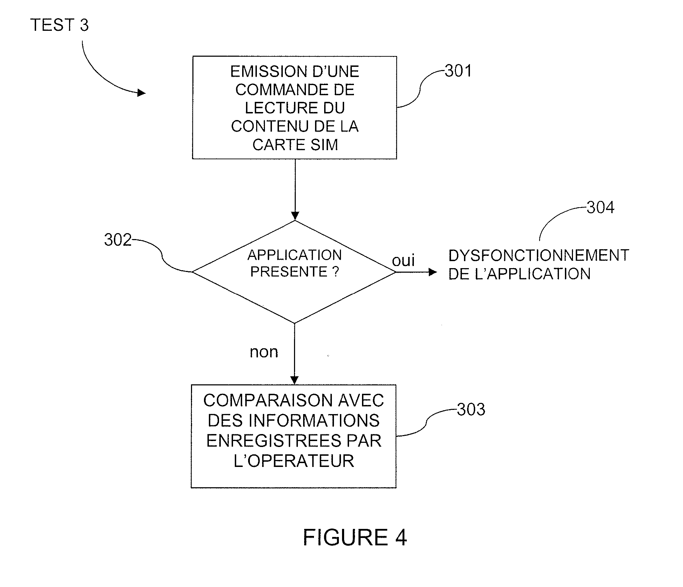

La troisième opération de test (TEST 3) est représentée sur la figure 4.

Selon une première étape 301, le programme de diagnostic commande une émission par l'antenne d'un signal radiofréquence sous la forme d'une commande d'interrogation de la liste des applications présentes dans la carte UICC (Commande APDU Global Platform GET STATUS les commandes APDU Global Platform étant des commandes d'interrogation effectuées au niveau de la couche d'application). En réponse à cette commande, le module de communication sans contact du terminal renvoie une liste des applications sans contact présentes dans la carte UICC.

Selon une deuxième étape 302, le programme de diagnostic détermine si une application donnée est présente dans la liste.

Si l'application est absente, alors selon une troisième étape 303, la borne de diagnostic interroge la base de données de manière à vérifier que l'utilisateur a souscrit au service associé à l'application absente.

Si l'utilisateur a souscrit au service, l'utilisateur est invité à contacter le fournisseur du service associé à l'application.

Dans le cas contraire, la borne de diagnostic conclut que l'utilisateur n'a pas souscrit au service associé à l'application.

Si l'application est présente, alors selon une quatrième étape 304, le programme de diagnostic conclut à un dysfonctionnement de l'application. Dans ce cas, l'utilisateur est invité à contacter le fournisseur du service associé à l'application défaillante.Le tableau 2 illustre les résultats possibles du procédé de diagnostic :

**Tableau 2**

| Opération de test | Résultat du test | | | |
|---|---|---|---|---|
| TEST 1 | Aucune réponse détectée | Réponse détectée | | |
| TEST 2 | - | Echec de la sélection | Sélection réussie | |
| TEST 3 | - | - | Application présente | Application absente |
| Diagnostic | Dysfonctionnement du terminal mobile | Dysfonctionnement du terminal ou de la carte UICC | Dysfonctionnement de l'application | Service non-disponible |

## Revendications

1. Procédé de diagnostic d'un terminal de téléphonie mobile incluant une carte UICC dans laquelle est enregistrée une application témoin et un module de communication sans contact, le module de communication sans contact étant apte à échanger des données avec une borne sans contact par rétromodulation d'un signal émis par la borne, ledit procédé étant **caractérisé en ce qu'**il comprend une opération de test selon laquelle :
- (201) la borne émet une requête de sélection de l'application témoin,
- (202, 204) la borne détecte une réponse de confirmation ou d'échec de sélection de l'application, émise par le terminal de téléphonie mobile,
- (203, 206) la borne détermine un état de fonctionnement de la carte UICC ou du terminal en fonction de la réponse détectée.

2. Procédé selon la revendication 1, comprenant une étape selon laquelle :
- (203) si la borne ne détecte aucune réponse de la part du terminal mobile, la borne en déduit un dysfonctionnement du terminal mobile.

3. Procédé selon l'une des revendications 1 ou 2, comprenant une étape selon laquelle :
- (206) si la borne détecte une réponse d'erreur de la part du terminal mobile, la borne en déduit un dysfonctionnement de la carte UICC.

4. Procédé selon l'une des revendications 1 à 3, comprenant une opération de test préalable selon laquelle :
- (101) la borne émet une requête de détection présentant un format prédéterminé,
- (102) la borne détecte ou non une réponse émise par le terminal de téléphonie mobile,
- (104) la borne en déduit un état de fonctionnement du terminal mobile en fonction de la détection ou non de la réponse.

5. Procédé selon la revendication 4, dans lequel :
- (101) la borne émet une pluralité de requêtes de détection successives, chaque requête présentant un format qui varie selon une séquence prédéterminée de format de requête.

6. Procédé selon l'une des revendications 4 ou 5, dans lequel :
- (103) si la borne détecte une réponse, alors la borne exécute les étapes de la revendication 1,
- (104) si la borne ne détecte aucune réponse, alors la borne en déduit un dysfonctionnement du terminal.

7. Procédé selon l'une des revendications 1 à 6, comprenant une opération de test ultérieure selon laquelle :
- (301) la borne émet commande d'interrogation du répertoire de la carte UICC,
- (302) la borne détermine si une application donnée est présente dans la carte UICC en recherchant l'application parmi une liste d'applications transmise par le terminal mobile en réponse à la commande d'interrogation,
- (304) la borne en déduit un état de fonctionnement de l'application.

8. Procédé selon la revendication 7, dans lequel :
- (304) si la borne détermine que l'application donnée est présente, alors la borne en déduit un dysfonctionnement de l'application.

9. Procédé selon l'une des revendications 7 ou 8, dans lequel :
- (303) la borne interroge une base de données pour déterminer si un utilisateur du terminal mobile a souscrit à un service associé à l'application donnée.

10. Borne sans contact (20) pour diagnostiquer un état de fonctionnement d'un terminal de téléphonie mobile (10) incluant une carte UICC (13), ladite borne étant **caractérisée en ce que** :
- une application témoin et un module de communication sans contact (12) étant enregistrées dans ladite carte UICC (13), et ledit module de communication sans contact étant apte à échanger des données avec la borne sans contact (20) par rétromodulation d'un signal émis par la borne,
- la borne (20) est apte à exécuter une ou des opération(s) de test conforme(s) à l'une des revendications 1 à 9.

11. Terminal de téléphonie mobile (10) incluant une carte UICC (13), ledit terminal étant **caractérisé en ce que** :
- une application témoin et un module de communication sans contact (12) sont enregistrées dans ladite carte UICC (13),
- le module de communication sans contact (12) est apte à échanger des données avec une borne sans contact (20) par rétromodulation d'un signal émis par la borne (20), et
- l'application témoin est programmée pour exécuter une opération de test selon laquelle, lorsque le module de communication reçoit une requête de sélection de l'application témoin émise par la borne, le module de communication renvoie à la borne une réponse de confirmation de sélection de l'application, de sorte que la borne puisse déterminer un état de fonctionnement de la carte UICC en fonction de la réponse renvoyée.

## Patentansprüche

1. Verfahren zur Diagnose eines Mobiltelefonendgeräts mit einer UICC-Karte, auf der eine Testapplikation und ein berührungsloses Kommunikationsmodul gespeichert ist, wobei das berührungslose Kommunikationsmodul in der Lage ist, mit einem berührungslosen Terminal durch Rückmodulierung eines durch das Terminal ausgegebenen Signals Daten auszutauschen, wobei das Verfahren **dadurch gekennzeichnet ist, dass** es einen Testvorgang umfasst, bei dem:
- (201) das Terminal eine Anforderung zur Auswahl der Testapplikation ausgibt,
- (202, 204) das Terminal eine Antwort der Bestätigung oder der misslungenen Auswahl der Applikation erkennt, die durch das Mobiltelefonendgerät ausgegeben wird,
- (203, 206) das Terminal einen Betriebszustand der UICC-Karte oder des Endgeräts in Abhängigkeit von der erkannten Antwort bestimmt.

2. Verfahren nach Anspruch 1, umfassend einen Schritt, bei dem:
- (203), wenn das Terminal keine Antwort seitens des mobilen Endgeräts erkennt, das Terminal daraus eine Funktionsstörung des mobilen Endgeräts ableitet.

3. Verfahren nach einem der Ansprüche 1 oder 2, umfassend einen Schritt, bei dem:
- (206), wenn das Terminal eine Fehlermeldung seitens des mobilen Endgeräts erkennt, das Terminal daraus eine Funktionsstörung der UICC-Karte ableitet.

4. System nach einem der Ansprüche 1 bis 3, umfassend einen vorherigen Testvorgang, bei dem:
- (101) das Terminal eine Anforderung zur Erkennung ausgibt, die ein vorbestimmtes Format aufweist,
- (102) das Terminal eine durch das Mobiltelefonendgerät ausgegebene Antwort erkennt oder nicht erkennt,
- (104) das Terminal daraus einen Betriebszustand des mobilen Endgeräts in Abhängigkeit von der Erkennung oder Nichterkennung der Antwort ableitet.

5. Verfahren nach Anspruch 4, bei dem:
- (101) das Terminal eine Mehrzahl von aufeinander folgenden Erkennungsanforderungen ausgibt, wobei jede Anforderung ein Format aufweist, das gemäß einer vorbestimmten Anforderungsformatsequenz variiert.

6. Verfahren nach einem der Ansprüche 4 oder 5, bei dem:
- (103) wenn das Terminal eine Antwort erkennt, das Terminal dann die Schritte von Anspruch 1 ausführt,
- (104) wenn das Terminal keine Antwort erkennt, das Terminal daraus dann eine Funktionsstörung des Endgeräts ableitet.

7. Verfahren nach einem der Ansprüche 1 bis 6, umfassend einen weiteren Testvorgang, bei dem:
- (301) das Terminal einen Befehl zur Abfrage des Verzeichnisses der UICC-Karte ausgibt,
- (302) das Terminal bestimmt, ob eine bestimmte Applikation auf der UICC-Karte vorhanden ist, indem es die Applikation in einer Applikationsliste sucht, die durch das mobile Endgerät als Antwort auf den Abfragebefehl übertragen wird,
- (304) das Terminal daraus einen Betriebszustand der Applikation ableitet.

8. Verfahren nach Anspruch 7, bei dem:
- (304) wenn das Terminal bestimmt, dass die bestimmte Applikation vorhanden ist, das Terminal daraus dann eine Funktionsstörung der Applikation ableitet.

9. Verfahren nach einem der Ansprüche 7 oder 8, bei dem:
- (303) das Terminal eine Datenbank abfragt, um zu bestimmen, ob ein Benutzer des mobilen Endgeräts einen Dienst abonniert hat, welcher der bestimmten Applikation zugehörig ist.

10. Berührungsloses Terminal (20) zum Diagnostizieren eines Betriebszustands eines Mobiltelefonendgeräts (10) mit einer UICC-Karte (13), wobei das Terminal **dadurch gekennzeichnet ist, dass**:
- eine Testapplikation und ein berührungsloses Kommunikationsmodul (12) auf der UICC-Karte (13) gespeichert sind und das berührungslose Kommunikationsmodul in der Lage ist, mit dem berührungslosen Terminal (20) durch Rückmodulierung eines durch das Terminal (20) ausgegebenen Signals Daten auszutauschen,
- das Terminal (20) in der Lage ist, einen Testvorgang oder mehrere Testvorgänge nach einem der Ansprüche 1 bis 9 auszuführen.

11. Mobiltelefonendgerät (10) mit einer UICC-Karte (13), wobei das Endgerät **dadurch gekennzeichnet ist, dass**:
- eine Testapplikation und ein berührungsloses Kommunikationsmodul (12) auf der UICC-Karte (13) gespeichert sind,
- das berührungslose Kommunikationsmodul (12) in der Lage ist, mit einem berührungslosen Terminal (20) durch Rückmodulierung eines durch das Terminal (20) ausgegebenen Signals Daten auszutauschen, und
- die Testapplikation programmiert ist, um einen Testvorgang auszuführen, bei dem, wenn das Kommunikationsmodul eine Anforderung zur Auswahl der Testapplikation empfängt, die durch das Endgerät ausgegeben wird, das Kommunikationsmodul an das Terminal eine Antwort der Bestätigung der Auswahl der Applikation zurücksendet, so dass das Terminal einen Betriebszustand der UICC-Karte in Abhängigkeit von der zurückgesendeten Antwort bestimmen kann.

## Claims

1. Method for the diagnostic testing of a mobile telephone terminal including a UICC card containing a stored test application and a contactless communication module, the contactless communication module being able to exchange data with a contactless unit by retromodulation of a signal transmitted by the unit, said method being **characterised in that** it comprises a test operation whereby:
- (201) the unit emits a test application selection request;
- (202, 204) the unit detects a response indicating application selection confirmation or failure, transmitted by the mobile telephone terminal; and
- (203, 206) the unit determines the operating state of the UICC card or of the terminal as a function of the detected response.

2. Method according to claim 1, comprising a step according to which:
- (203) if the unit does not detect any response from the mobile terminal, the unit deduces a malfunction of the mobile terminal.

3. Method according to one of claims 1 or 2, comprising a step according to which:
- (206) if the unit detects an error response from the mobile terminal, the unit deduces a malfunction of the UICC card.

4. Method according to one of claims 1 to 3, comprising a prior test operation according to which:
- (101) the unit transmits an initialization request having a predetermined format,
- (102) the unit detects or does not detect a response transmitted by the mobile telephone terminal,
- (104) the unit deduces an operating state of the mobile terminal based on the detection or non-detection of the response.

5. Method according to claim 4, in which:
- (101) the unit transmits a plurality of successive detection requests, each request having a format that varies according to a predetermined request format sequence.

6. Method according to one of claims 4 or 5, in which:
- (103) if the unit detects a response, then the unit carries out the steps of claim 1,
- (104) if the unit does not detect a response, then the unit deduces a malfunction of the terminal.

7. Method according to one of claims 1 to 6, comprising a subsequent testing operation according to which:
- (301) the unit transmits a query command to the UICC card's directory,
- (302) the unit determines whether a given application is present in the UICC card by looking for the application in a list of applications sent by the mobile terminal in response to the query command,
- (304) the unit deduces an operating state of the application.

8. Method according to claim 7, in which:
- (304) if the unit determines that the given application is present, then the unit deduces a malfunction of the application.

9. Method according to one of claims 7 or 8, in which:
- (303) the unit queries a database to determine whether the mobile telephone user has subscribed to a service associated with the given application.

10. Contactless unit (20) for diagnostic testing of an operating state of a mobile telephone terminal (10) including a UICC card (13), said unit being **characterised in that**:
- a test application and a contactless communication module (12) being stored in said UICC card (13), and said contactless communication module being able to exchange data with the contactless unit (20) by retromodulation of a signal transmitted by the unit,
- the unit (20) is able to carry out one or several of the test operations according to one of claims 1 to 9.

11. Mobile telephone terminal (10) including a UICC card (13), said terminal being **characterised in that**:
- a test application and a contactless communication module (12) are stored in said UICC card (13),
- the contactless communication module (12) is able to exchange data with a contactless unit (20) by retromodulation of a signal transmitted by the unit (20), and
- the test application is programmed to carry out a test operation according to which, when the communication module receives a test application selection request transmitted by the unit, the communication module sends an application selection confirmation response back to the unit, such that the unit can determine an operating state of the UICC card according to the sent back response.
